# EUROPEAN PATENT APPLICATION

(11) **EP 4 481 368 A1**
(43) Date of publication of application: **25.12.2024**
(21) Application number: 23180052.5
(22) Date of filing: 19.06.2023
(51) Int. Cl.: G01N 21/05, G01N 21/15, G01N 21/53, G01N 21/03

(54) **MEASURING CUVETTE FOR AN OPACITY METER**

(71) Applicant: ATAL s.r.o., 39001 Tábor (CZ)
(72) Inventor: Horejsi, Josef, 39161 Oparany (CZ); Kotaska, Milan, 39133 Jistebnice (CZ); Freitag, Petr, 39155 Chynov (CZ); Chlada, Stanislav, 39155 Chynov (CZ); Mendl, Vladimir, 39001 Tabor (CZ)
(74) Representative: Sedlák, Jirí

(57) **Abstract**

The invented measuring cuvette is intended for opacity meters used primarily to measure emissions from combustion engines of vehicles. The measuring cuvette has two inlets (2) connected to its body (1) for the introduction of the measured sample, which have an extended mouth to perform the function of a nozzle directing the flow of the measured sample including its contaminating particles (solid and liquid particles). The inlets (2) form an acute angle with the wall of the body (1) and are directed towards the centre of the body (1). The outlet (3) is created in the wall of the body (1) in the middle of the distance between the inlets (2) to remove the measured emissions. Turbulence of the measured sample is reduced in the body (1) by providing the outlet (3) with means (8) for generating vacuum.

## Description

### Field of the Invention

The invention relates to a measuring cuvette for an opacity meter used primarily to measure the emissions from combustion engines of vehicles.

### Background of the Invention

The opacity of the combustion engine is one of the parameters assessed in measuring emissions from combustion engines of vehicles. The measurement of the opacity makes it possible to verify, for example, whether the fuel mixture does not become contaminated during the combustion process, for example with oil from the oil bath of the combustion engine, as well as the functionality of solid particle filters, etc.

Opacity is determined by measuring opacity, which is the ability of substance to absorb light. The opacity scale lies between complete opacity and complete transparency. The measurement of opacity through the opacity-based method is based on the measurement of the optical attenuation of light passing through a column of measured emissions located in a measuring cuvette.

Opacity meters used to measure the opacity include, in the basic design, a measuring cuvette to define the sample column of measured emissions. The measuring cuvette is pass-through for the supplied sample and, thus, it consists of an inlet for the supply of emissions samples and an outlet for the discharge of emissions samples. In addition, opacity meters in the basic design consist of a measuring system, which includes a light source, an incident light sensor, optical elements for optical modification of the light passing through the measuring cuvette, and an evaluating electronic unit connected to the light source and to the incident light sensor. A probe for the supply of emissions samples from the exhaust of a motor vehicle into a measuring cuvette is another integral part of the opacity meter. The probe consists of a hose that is adapted at one end to be connected to the inlet of a measuring cuvette and closed at the other end by a sampling termination to be inserted into the exhaust of a motor vehicle. The measuring cuvette and the probe are equipped with heating elements to prevent condensation of water vapours containing other liquid particles (lubricants, unburned fuel residues, etc.) and solid particles (dust, soot, etc.) in the emissions samples. The evaluation of the measurement results takes place in the evaluating electronic unit of the measuring system.

During the measurement, the combustion engine changes from the idling speed to the cut-off speed with the accelerator at full-throttle, while the engine is loaded by its own inertial mass and the mass of the clutch and the gear in neutral.

An example of an opacity meter for measuring emissions from combustion engines can be the invention known from document US 5 777 748. The measuring cuvette of the invention has a cylindrical shape, while the inlet of the measured gas sample is in the area of one end of the measuring cuvette and the outlet of the measured gas sample is in the area of the opposite end of the measuring cuvette. The inlet and outlet of the measuring cuvette run from the side of the casing of the measuring cuvette, while the bases of the measuring cuvette are optically transparent. A light source and an optical lens are arranged from the side of one base of the measuring cuvette, while at the opposite base, a light beam sensor and an optical lens are arranged.

The disadvantages of this known invention are that if emissions of combustion engines are measured, the transparent bases become dirty, which distorts the result of the measurement of opacity.

The above-mentioned shortcoming with dirtying of the inner sides of the transparent walls of the measuring cuvette is addressed by experts by using pneumatic knives. These are transparent barriers of fast-flowing air, the stream of which carries away all particles and aerosols directed to the transparent surface. An example of such a solution is the invention in document EP 2 803 976.

Although at first glance the above-mentioned invention appears to address the previous shortcomings, a closer examination of the invention reveals other shortcomings, which include experience known from practice that pneumatic knives have a limited ability not to lest fast-flying or heavier particles pass through with inertia sufficient to overcome the flow of the pneumatic knife. A combustion engine during test acceleration changes steeply the pressure of emissions in the exhaust, and this is not a continuous increase in pressure, but rather a chain of pressure shocks with increasing intensity. These sudden pressure changes cause the contamination to be overcome by the pneumatic knife. In addition, a constant width of pneumatic knives is taken into account when measuring the opacity, which is not sustainable in practical conditions, just from the point of view of the dynamic behaviour of measured flue gases.

The described shortcomings of perpendicularly oriented pneumatic knives arranged at the transparent bases of the measuring cuvette are attempted to be addressed by the invention known from document US 5 424 842. In the invention, there was a change in the spatial orientation of the pneumatic knives, which are now oriented longitudinally with the measuring cuvette. This means that the pneumatic knives are oriented from the transparent bases towards the centre of the measuring cuvette, which significantly increased the width of the pneumatic knives, which do not let any of the components of measured flue gases to pass through.

However, a detailed examination of the invention revealed shortcomings. The first shortcoming is the contamination of the measured sample with external air, which affects the result of the measurement. In particular, emissions in modern internal combustion engines are many times lower than before. Therefore, opacity meters must measure very little significant optical attenuation, which can be distorted by any contamination. In the case of pneumatic knives blowing air directly into the sample, contamination is enormous in terms of measurement.

A persistent disadvantage is the effects of dynamic changes in pressure of the supplied emissions samples depending on the operation of the combustion engine. Pressure shocks generated by the combustion engine tend to blow emissions into the path of the pneumatic knife in the measured emissions samples, and although the impurities do not reach the transparent bases, because the pneumatic knife is wide enough, the emissions reach part of its length, making the measurement inaccurate because it changes the total column length of the measured sample.

The object of the invention is to create a measuring cuvette for an opacity meter, which would be used primarily to measure emissions from combustion engines of vehicles, and which would address the problem with the deposition of impurities from the measured samples on the inner walls of the transparent surfaces of the measuring cuvette, without the measures taken against the deposition of impurities affecting the performed measurements of opacity.

### Summary of the Invention

The object is achieved by creating a measuring cuvette for an opacity meter according to the invention below.

The measuring cuvette for the opacity meter consists of a hollow body with an inlet for the supply of the measured sample inside the body and an outlet for the discharge of the measured sample out of the body. At the same time, the body of the measuring cuvette has opposite transparent bases for the external arrangement of the components of the measuring system for measuring opacity inside the body of the measuring cuvette. The purpose of the body is to define the proscribed column of the measured sample, which is measured in terms of opacity. Thus, the column of the measured sample is located inside the body, with the reference light entering and the attenuated light leaving through the transparent bases.

The summary of the invention is based on the inlet of measured sample into the body created for each of the transparent bases. This means that a column of measured sample is created simultaneously from each of the transparent bases towards the centre of the body, so that the pressure of measured sample is distributed evenly through the body against each other from both ends of the body. At the same time, the inlets are extended into the interior of the body, with their extensions oriented towards the centre of the body and forming an acute angle with the wall of the body. The extensions of inlets basically create nozzles that direct the flow of smoke inside the body towards its centre. Directing the flow reduces dirtying of the transparent bases, as the measured sample leaving the nozzle mouth on the side opposite to the side of the transparent base. It is also important for the invention that the outlet of the measured sample from the body of the measuring cuvette is created in the middle of the body of the measuring cuvette, so that the measured sample can flow out smoothly without creating turbulence and shocks in the body, which would disturb the direction of the smoke inside the body.

The main advantage of the invention is that the measured sample is used as a wide longitudinally guided pneumatic knife. It is advantageous that the measured sample is not contaminated with air, as is the case for existing solutions with air pneumatic knives. The invention uses the hitherto problematic inertia of the heavier components of emissions (solid particles, liquid particles) to its benefit, when it "catapults" them directly towards the outlet of emissions out of the body of the measuring cuvette. These problematic particles will be included in the measurement of opacity, but with a lower probability of hitting the transparent bases to which they would adhere.

It is advantageous within the scope of the invention if the outlet is provided with means for generating vacuum in the body. By generating vacuum through the outlet of the body, turbulence in the measured sample is reduced in the middle of the body. The flow lines of the measured sample in the column defined by the body are arranged and do not collide, preventing even problematic particles from getting off the desired direction, which do not tend to adhere to the transparent bases.

For even higher sustainability of the transparency of the bases, it is preferred if the body of each of the transparent bases is provided with a partition with a central hole, which is located between the transparent base and the outlet. To perform the measurement of opacity, central holes are sufficient, which allow the passage of a light beam in the direction of the central axis of the body of the measuring cuvette. If problematic particles from the measured sample leave the main flow lines and spread, for example, along the inner surface of the body, where the boundary flow lines do not have enough energy to carry them into the main direction of flow, then these particles will be stopped by the aforementioned partition, to which they adhere, while the transparent base remains transparent.

The main benefit of the invented measuring cuvette is the significant reduction of the tendency to get the transparent bases dirty with problematic particles contained in the measured samples, in particular in the measured samples of emissions from combustion engines. Opacity meters with the invented measuring cuvette have a noticeably longer service interval, which brings significant economic savings in the long term.

### Explanation of drawings

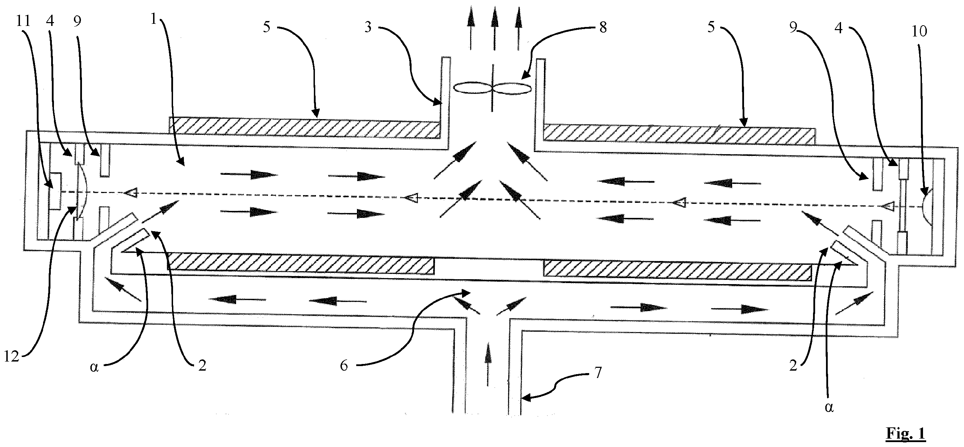

The present invention will be explained in detail by means of the following figures where: Fig. 1 shows a simple section of the invented measuring cuvette of an opacity meter.

### Example of the invention embodiments

It shall be understood that the specific cases of the invention embodiments described and depicted below are provided for illustration only and do not limit the invention to the examples provided here. Those skilled in the art will find or, based on routine experiment, will be able to provide a greater or lesser number of equivalents to the specific embodiments of the invention which are described here.

Fig. 1 shows a section of the inventive measuring cuvette of an opacity meter. Each measuring cuvette consists of body 1, the main purpose of which is to define the column of the measured sample. The length of the column must be known in order to assess the optical attenuation caused by the sample to be measured. The essential feature of the body 1 is that it is longitudinal and hollow. The opposite ends of the body 1 form bases 1, which are transparent so that the means of the measuring system (light source 10, optical elements 12, light sensor 11, etc.) can be attached to them from the outside of the volume defined by the body 1 to create a column of smoke. Two inlets 2 to supply the measured sample into the body 1 and one outlet 3 to discharge the measured sample out of the body 1 are connected to the body 1.

The inlets 2 show an extension to basically perform the function of a nozzle. The mouth of the inlets 2 points towards the centre of the body 1 and towards the central longitudinal axis of the body 1. The inlets 2 form an acute angle α with the wall of the body 1. The ideal size of the angle α is 45°, but practical tests have shown that the value can be in the range from 15° to 75° to preserve the main advantage of the invention. The extended mouths of the inlets 2 must not interfere with the optical path of the light beam going along the longitudinal central axis of the body 1.

The outlet 3 from the body 1 is made in the middle of body 1. The outlet 3 in the illustrated example of the invention is equipped with a fan, which performs the function of means 8 for generating vacuum.

The bases 4 of the body 1 are transparent. In the illustrated example of the invention embodiments, optical lenses are inserted into the bases 4. In other embodiments of the invention, the bases 4 can be made of simple transparent material and the means of the measuring system can be arranged on the outside of the bases 4.

Furthermore, Fig. 1 shows the heating elements 5 of the measuring cuvette, which are used to keep the measured emissions samples at higher temperature.

Fig. 1 further shows the conduit 6 which receives the measured emissions through the connection 7 from non-illustrated gas line of the sampling probe inserted into the exhaust of the vehicle. In this particular example of embodiment, the conduit 6 is integrated into the measuring cuvette and is facing the outside of the body 1. The connection 7 is made in the middle of the conduit 6.

In another non-illustrated example of the invention embodiment, the inlets 2 can be connected directly to the sampling probe supplying the measured sample.

The last technical feature shown in Fig. 1 is the partitions 9 with a central hole. The partitions 9 are not made of transparent material and their central hole has an appropriate diameter for the passage of the light beam of the measuring system.

### Industrial applicability

The measuring cuvette according to the invention finds its application in opacity meters, in particular for measuring emissions of vehicles with combustion engines.

### List of reference numerals

- 1: body of the measuring cuvette
- 2: inlet
- 3: outlet
- 4: base
- 5: heating element
- 6: conduit
- 7: connection
- 8: means for generating vacuum
- 9: partition with central hole
- 10: light beam source of the measuring system
- 11: light beam sensor of the measuring system
- 12: optical element

## Claims

1. A measuring cuvette for an opacity meter consisting of a hollow body (1) having an inlet (2) to introduce the measured sample and an outlet (3) to remove the measured sample, while the body (1) of the measuring cuvette has transparent bases (4) for external attachment of the components of the measuring system for the measurement of opacity inside the body (1), **characterized in that** an inlet (2) is created at each of the transparent bases (4) and at the same time the inlets (2) are extended into the interior of the body (1), while their extensions are oriented towards the centre of the body (1) and form an acute angle (α) with the wall of the body (1), and further the outlet (3) is formed in the wall of the body (1) in the middle of the length defined by the inlets (2).

2. The measuring cuvette according to claim 1, **characterized in that** the outlet (3) is provided with means (8) for generating vacuum in the body (1).

3. The measuring cuvette according to claim 1 or 2, **characterized in that** the body (1) at each of the transparent bases (4) is provided with a partition (9) with a central hole for the passage of the light beam of the measuring system, and each of the partitions (9) is arranged between the transparent base (4) and the outlet (2).
